# EUROPÄISCHE PATENTSCHRIFT

(11) **EP 0 444 480 B1**
(45) Veröffentlichungstag und Bekanntmachung des Hinweises auf die Patenterteilung: **27.10.1993**
(21) Anmeldenummer: 91102086.5
(22) Anmeldetag: 14.02.1991
(51) Int. Cl.: E01B 11/52, B23K 23/00

(54) **Verfahren zur Zwischengussschweissung feinperlitisierter Schienen**
Process for the intermediate cast welding of isothermal annealed rails
Procédé pour le soudage par coulée intermédiaire de rails recuits de microperlitisation

(30) Priorität: 27.02.1990 DE 4006071
(43) Veröffentlichungstag der Anmeldung: 04.09.1991
(73) Patentinhaber: Elektro-Thermit GmbH, D-45139 Essen (DE)
(72) Erfinder: Guntermann, Hans, Dr., W-4300 Essen (DE); Kuster, Frank, Dr., W-4030 Ratingen 6 (DE)
(74) Vertreter: Perret, Georg, Dr.

(56) Entgegenhaltungen:
- DE-A- 2 161 134
- DE-C- 572 591
- FR-A- 817 911
- FR-A- 2 123 862
- FR-A- 2 266 570

## Beschreibung

Die Erfindung betrifft ein Verfahren zur Zwischengußschweißung feinperlitisierter Schienen durch Eingießen aluminothermisch erzeugten Stahles in eine die beiden Schienenenden umgebende Gießform und Abkühlen der beiden an die Gießform angrenzenden Schienenenden mit einem Kühlmittel.

Der Verschleiß einer Schiene wird bei gegebener Beanspruchung unter dem Fahrbetrieb im wesentlichen von der Schienenfestigkeit bzw. der Härte bestimmt. Zur Zeit verwenden die Eisenbahnen in ihren durchgehend geschweißten Gleisen zum überwiegenden Teil naturharte Schienen mit einer Mindestzugfestigkeit von 900 N/mm². Dabei stehen dem Schienenhersteller zum Erreichen der Schienenfestigkeit die Legierungselemente Kohlenstoff und Mangan zur Verfügung. Bei stark erhöhter Beanspruchung, wie sie z.B. an Bogenaußenschienen in Kurven vorliegt, kommt auch die naturharte, zusätzlich mit Chrom und/oder Vanadin legierte Sondergüte mit 1100 N/mm² Mindestzugfestigkeit zum Einsatz.

Alternativ zur naturharten, legierten Sondergüte besteht auch die Möglichkeit, hohe Festigkeiten durch eine Wärmebehandlung der Schienen nach dem Walzvorgang zu erzielen. Im allgemeinen ist es üblich, die Wärmebehandlung auf den fahrflächennahen Bereich der Schienen zu beschränken. Solche Schienen entsprechen in ihrer chemischen Zusammensetzung etwa den Schienen mit 900 N/mm² Mindestzugfestigkeit, wobei das perlitische Gefüge aufgrund der Wärmebehandlung äußerst feinlamellar ist, mit der Folge einer entsprechend hohen Härte bzw. Festigkeit.

Die vorliegende Erfindung betrifft die Verbesserung des Härteverlaufs in aluminothermisch erzeugten Schweißstellen im Kopfbereich dieses Schienentyps.

Das aluminothermische Schweißverfahren führt als Schmelzschweißverfahren zu einer charakteristischen Ausbildung des Schweißbereiches in Form eines Zwischengußbereiches, der aus aluminothermisch erzeugtem Stahl und aufgelöstem Schienenstahl besteht und sich zentral in der ursprünglich vorhandenen Schweißlücke zwischen den beiden Schienenenden befindet, sowie je einer Wärmeeinflußzone rechts und links von der Schweißnaht.

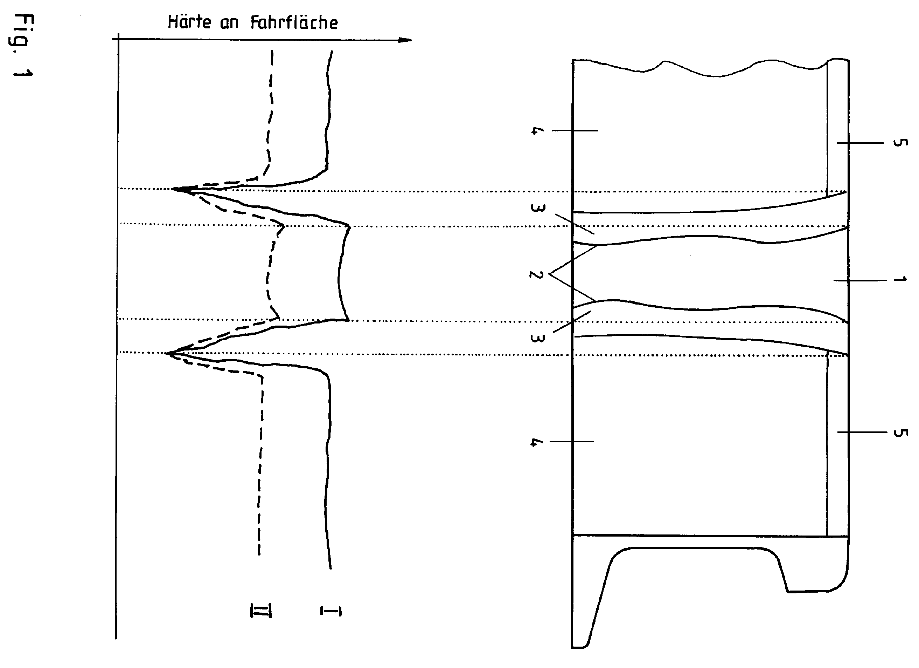

Fig. 1 zeigt diese Bereiche anhand eines Längsschnittes durch die Symmetrieebene einer feinperlitisierten (kopfgehärteten) Schiene in schematischer Darstellung. Dabei ist mit 1 der Zwischengußbereich, bestehend aus aluminothermisch erzeugtem Stahl und aufgeschmolzenem Schienenstahl bezeichnet. Begrenzt durch die Schmelzlinien 2 schließen sich beidseits die Wärmeeinflußzonen 3 an, die in den Bereich des wärmeunbeeinflußten Schienenstahles 4 übergehen. Mit 5 ist der feinperlitisierte Schienenkopfbereich bezeichnet.

Für das Verschleißverhalten unter dem Fahrbetrieb ist diese Ausbildung außerordentlich bedeutsam. Die Härte und damit gleichbedeutend die Festigkeit der Schweißnaht und somit auch deren Verschleißwiderstand können bei gegebener Abkühlungsgeschwindigkeit der Schweißung recht genau von der freiwählbaren chemischen Zusammensetzung des alumino-thermischen Stahles beeinflußt werden. Die Härte des Zwischengußbereiches stellt daher aus verschleißtechnischer Sicht kein Problem für die Schienenschweißung dar. Innerhalb der beiden Wärmeeinflußzonen liegen die Verhältnisse jedoch anders. Hier bestimmen die gegebene chemische Zusammensetzung der Schiene und die Abkühlungsgeschwindigkeit der Schweißung gemeinsam die Härteverteilung. In Schienenlängsrichtung gesehen nimmt innerhalb der Wärmeeinflußzonen mit zunehmender Entfernung von der Schweißnahtmitte die Härte ständig ab, bis ein Minimalwert an der Grenze der Wärmeeinflußzone zum wärmeunbeeinflußten Schienenstahl durchschritten wird. Hier liegt die sogenannte Weichglühzone vor. Da mit abnehmender Härte auch der Verschleißwiderstand geringer wird, ist unter dem Fahrbetrieb mit einem erhöhten Verschleiß, insbesondere in den Wärmeeinflußzonen, zu rechnen.

Die geringe Härte innerhalb der Wärmeeinflußzonen ist auf metallphysikalische Ursachen zurückzuführen. In dem größten Teil der Wärmeeinflußzonen, angrenzend an den Zwischengußbereich, wird der Schienenstahl austenitisiert, während im weiter von der Schweißnaht entfernt liegenden Teil der Wärmeeinflußzonen eine maximale Temperatur in der Schiene von 600 bis 700°C erreicht wird. Während der Abkühlung der Schweißung scheiden sich unterschiedliche Gefügestrukturen in den Wärmeeinflußzonen aus:
an der Schmelzlinie, d.h. am Übergang Zwischengußbereich / Wärmeeinflußzonen z.B. ein grobkörniger, harter Perlit,
am Übergang Wärmeeinflußzone / wärmeunbeeinflußter Schienenstahl, d.h. am Ende der Wärmeeinflußzonen, ein eingeformter weicher kugeliger Perlit.

Da die Abkühlungsgeschwindigkeit der aluminothermischen Schweißung ebenso wie die chemische Zusammensetzung der Schienen vorgegeben ist, entsteht je nach der Schienenstahlqualität eine bestimmte Gefügestruktur und damit eine bestimmte Härteverteilung in den Wärmeeinflußzonen in Schienenlängsrichtung gesehen.

Bei der Schweißung von naturharten Schienen, die also von den Schienenherstellern keiner Wärmebehandlung nach dem Walzen unterzogen wurden, ergibt sich die Härteverteilung innerhalb der Wärmeeinflußzonen in Abhängigkeit von der chemischen Zusammensetzung des Schienenstahles. Die Legierungselemente C, Mn, V, Cr u.a. beeinflussen das Härteniveau über das Umwandlungsverhalten des Schienenstahles und/oder über die Karbidbildung. Die Härte der wärmeunbeeinflußten Schiene wird aber ebenfalls, nämlich während der Abkühlung nach dem Walzvorgang, nur über diese beiden Mechanismen gesteuert. Beim Schweißen solcher naturharter Schienen stellt sich daher unabhängig von der Schienenstahlanalyse in etwa stets der gleiche Differenzbetrag zwischen der Härte der unbeeinflußten Schiene und dem Härteverlauf in den Wärmeeinflußzonen ein. Der Differenzbetrag ist aus verschleißtechnischer Sicht bei solchen aluminothermischen Schweißungen zu tolerieren.

Im Fall einer wärmenachbehandelten, feinperlitisierten Schiene, bei der das Härteniveau nach dem Walzen "künstlich" angehoben wird, entsteht ein größerer Differenzbetrag in den Härten, da das ursprünglich feinlamellare Perlitgefüge zerstört wird und die Härteverteilung in den Wärmeeinflußzonen nach dem Schweißen sich dann automatisch wie bei einer geschweißten naturharten Schiene mit 900 N/mm² Mindestzugfestigkeit ergibt. Dies ist bedingt durch die gleiche chemische Zusammensetzung der beiden Schienenstahlqualitäten.

Im unteren Teil der schematischen Darstellung von Fig. 1 ist der jeweilige Härteverlauf an der Fahrfläche in Schienenlängsrichtung dargestellt. Dabei entspricht I dem Härteverlauf einer Schweißung von feinperlitisierten (kopfgehärteten) Schienen und II dem Härteverlauf einer Schweißung von naturharten Schienen mit 900 N/mm² Mindestzugfestigkeit. Der Fahrspiegel der feinperlitisierten Schienen wird im Bereich der Wärmeeinflußzonen im Vergleich zum Schweißgut und den unbeeinflußten Schienen einem relativ stärkeren Verschleiß unterliegen als dies bei einer Schweißung von naturharten Schienen der Fall ist. Aus diesem Grund sind erhöhte Anforderungen an die Schweißtechnik für feinperlitisierte Schienen zu stellen.

In der Praxis haben sich zwei Verfahren zur aluminothermischen ZwiSchengußschweißung besonders bewährt und durchgesetzt. Es handelt sich dabei um die Verfahren entsprechend der DE-PS 22 08 692 und der DE-PS 21 61 134.

Das Verfahren gemäß DE-PS 22 08 692 ist gekennzeichnet durch die Kombination folgender Maßnahmen:
a) die Weite der Lücke zwischen den zu verschweißenden Schienenenden wird auf das 1- bis 2fache der Schienenstegdicke eingestellt;
b) der Hohlraum der Gießform wird derart gewählt, daß sich für den Schweißwulst eine Breite vom 2- bis 4fachen und eine Tiefe vom 0,15- bis 0,6fachen der Schienenstegdicke ergibt;
c) die Breite des Flammenbandes des Vorwärmbrenners wird auf das 1,5-bis 2,5fache der Schienenstegdicke eingestellt.

Diese Art der Durchführung der Schienenschweißung erfordert eine Vorwärmzeit der von den Formhälften umgebenen miteinander zu verschweißenden Schienenenden von etwa 6 bis 10 Minuten.

Das Verfahren gemäß der DE-PS 21 61 134 ist dadurch gekennzeichnet, daß die zu verschweißenden Schienenenden innerhalb eines Zeitraumes von maximal 2 Minuten auf eine Temperatur zwischen minimal 300°C und maximal 700°C vorgewärmt werden, wobei das Gewicht des aluminothermischen Gemisches 0,15 bis 0,25 Gewichtsteile des Metergewichtes der zu verschweißenden Schienen beträgt. Dieses Verfahren wird als Schweißverfahren mit kurzer Vorwärmung bezeichnet.

Der mit der Kurzvorwärmung verbundene steile Temperaturgradient in Schienenlängsrichtung bewirkt eine kleinere Ausdehnung der Wärmeeinflußzonen im Vergleich zu Verfahren mit normaler Vorwärmung. Der Abfall der Härte in den Wärmeeinflußzonen ist bei diesem Verfahren dementsprechend auf ein, in Schienenlängsrichtung gesehen, kleineres Gebiet begrenzt, was sich günstig auf das Verschleißverhalten unter dem Fahrbetrieb auswirkt. Aus diesem Grund wird dieses Verfahren für die Zwecke der vorliegenden Erfindung besonders bevorzugt.

Die Ausbildung des Zwischengußbereiches und der Wärmeeinflußzonen einer solchen Schweißung kann durch Modifikation des Gießformdesigns beeinflußt werden. So kann zum Beispiel eine größere Auflösung der Schienenenden und damit ein - in Schienenlängsrichtung gesehen - größerer Zwischengußbereich in einer nicht zu starken Schicht unter der Fahrfläche erzwungen werden. Damit ergibt sich eine Annäherung der Schmelzlinie an die wärmeunbeeinflußte Schiene im Fahrflächenbereich, der für den Verschleiß der Schiene und der Schweißung alleine maßgebend ist. Durch eine geeignete Gießtechnik kann dagegen im gesamten übrigen Schienenquerschnitt die Ausbildung des Zwischengußbereiches und der Wärmeeinflußzonen unverändert gehalten werden, so daß die äußere Begrenzung der Wärmeeinflußzonen an der Fahrfläche "festgehalten" wird. Die Wärmeeinflußzonen sind in diesem Fall vorteilhaft an der Fahrfläche verkleinert.

Eine Verbesserung des Härteverlaufs in den Wärmeeinflußzonen kann auch in bekannter Weise durch eine zusätzliche Wärmebehandlung der Schiene im Schweißbereich erfolgen. Üblicherweise wird eine solche Wärmebehandlung - gleichgültig, ob ein aluminothermisches Schweißverfahren oder eine Abbrennstumpfschweißung durchgeführt worden ist - ausgeführt, wenn die Schweißung auf Umgebungstemperatur oder wenigstens auf eine Temperatur unterhalb 700°C abgekühlt ist, d.h. auf eine Temperatur, bei der die Austenit-Perlit-Umwandlung abgeschlossen ist. Mit einer geeigneten Gasbrennervorrichtung wird die Schweißung wieder austenitisiert und anschließend durch Beaufschlagung mit Druckluft oder einem Druckluft/Wasser-Gemisch oder einem gleichwirkenden Kühlmedium beschleunigt abgekühlt. Dieses Verfahren hat jedoch den Nachteil, daß es im verlegten Gleis schlecht durchführbar ist und zudem ein aufwendiger apparativer Aufwand erforderlich ist, der auf die Baustelle zu transportieren ist.

Die französische Patentschrift FR-A-2 266 570 betrifft ein Verfahren zum aluminothermischen Schweißen von Eisenbahnschienen mit dem Kennzeichen, daß nach dem Einguß des aluminothermisch erzeugten Stahles in die Form die beiderseits der Form befindlichen Schienenteile so nahe wie möglich an der Schweißlinie gekühlt werden, wobei das Kühlmittel versprühtes Wasser oder mit Luft vermischtes Wasser ist. In der französischen Patentschrift ist eine Vorrichtung gezeigt, welche nach Durchführung des Zwischengusses auf die Schienenform aufgesetzt wird, um die der Schweißform benachbarten Schienenteile zu kühlen.

Die französische Patentschrift FR-A-2 123 862 betrifft ein ähnliches Verfahren, wobei wiederum nach erfolgter aluminothermischer Schweißung die an den Schweißbereich angrenzenden Schienenbereiche abgekühlt werden. Dabei können die Kühlkammern extra beiderseits der eigentlichen Schweißform angebracht sein, oder es können die Kühlkammern aus Hohlräumen bestehen, die in der Form selbst beiderseits der Schmelzkammer für das Schweißmetall angeordnet sind.

Beiden Patentschriften ist gemeinsam, daß die Abkühlung der an die Form angrenzenden Schienenteile erfolgt, solange die Gießform noch den eingegossenen, aluminothermisch erzeugten Stahl umschließt. Die Kühlvorrichtung der FR-A-2 266 570 ist so ausgebildet, daß man die zur Kühlung vorgesehene Baugruppe in weniger als einer Minute nach dem Abstich an der Form anbringen kann. Die Kühlung muß also unmittelbar nach der Schweißung erfolgen, um die Ausbildung von Gefügeveränderungen im angrenzenden Schienenbereich zu verhindern.

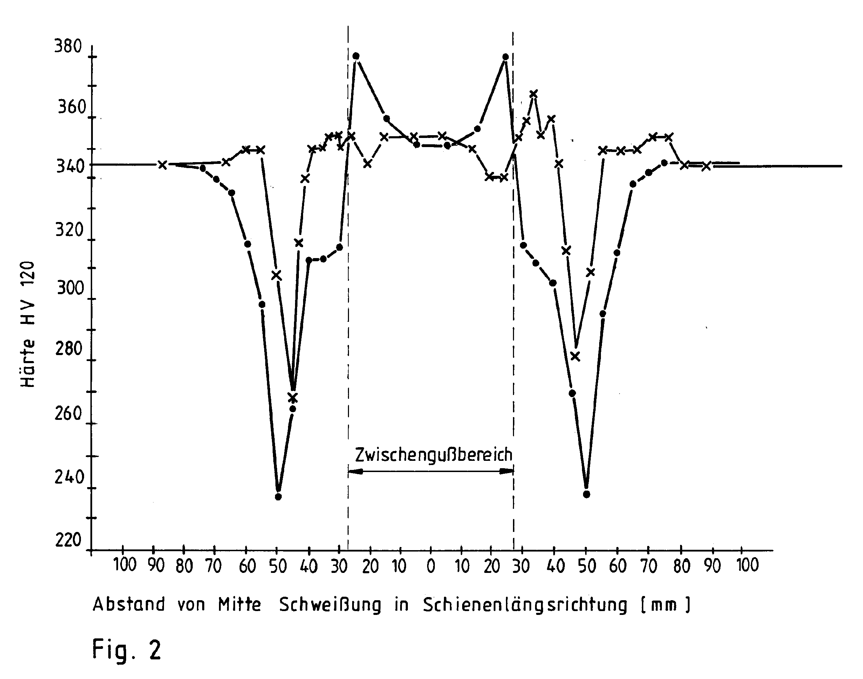

In Fig. 2 ist der Härteverlauf einer Schweißstelle ohne Kühlmittelbeaufschlagung (_._._._._._) und mit Kühlmittelbeaufschlagung (x-x-x-x-x-x) gezeigt. Die Schweißung wurde mit feinperlitisierten UIC 60-Schienen durchgeführt. Zur Anwendung kam das Verfahren gemäß DE-PS 21 61 134. Die Vorwärmzeit betrug 2 Minuten. Das aluminothermische Reaktionsgemisch war mit Legierungszusätzen in einer solchen Art und Menge versetzt, daß die Härte des Zwischengußbereiches der der feinperlitisierten Schiene im Ausgangszustand entsprach. Die Beaufschlagung der Schienenenden in unmittelbarer Nachbarschaft der Formhälften mit Preßluft erfolgte unmittelbar nach Einguß der aluminothermisch erzeugten Stahlschmelze und wurde 4 Minuten aufrechterhalten.

Es ist offensichtlich, daß der Härteverlauf in den Wärmeeinflußzonen der Schweißung mit Kühlmittelbeaufschlagung in bezug auf das Verschleißverhalten unter dem Fahrbetrieb günstiger zu beurteilen ist, als der Härteverlauf in den Wärmeeinflußzonen ohne Anwendung des Kühlmediums. Das Härtetal ist in Schienenlängsrichtung deutlich schmaler. Dies ergibt sich durch die Verschiebung des kleinsten Härtewertes zur Schweißnahtmitte hin. Da dieser kleinste Härtewert das Ende der Wärmeeinflußzone kennzeichnet, ist auch die Aussage möglich, daß vorteilhaft die Ausdehnung der Wärmeeinflußzonen in Schienenlängsrichtung geringer ist. Die Härteverteilung in dem Teil der Wärmeeinflußzonen, der durch die Gießform abgedeckt wird, ist gegenüber der Schweißung ohne Kühlmittelbeaufschlagung angehoben und dadurch verbessert. Der geringste Wert der Härte ist auf ein deutlich höheres Niveau angehoben, verglichen mit der entsprechenden Schweißung ohne Kühlmittelbeaufschlagung.

Erfindungsgemäß gelingt dies dadurch, daß man nach dem Erstarren des aluminothermisch erzeugten Stahles und dem Abscheren des überstehenden Schweißgutes und der Gießformhälften die Kühlung an der Oberfläche des Schienenkopfes unter Einbeziehung des Zwischengußbereiches fortsetzt, während der Schienensteg und der Schienenfuß im Zwischengußbereich nicht gekühlt werden. Dabei verwendet man vorzugsweise Preßluft als Kühlmittel.

In diesem Falle kann man ein aluminothermisches Gemisch mit geringerem Zusatz von härtesteigernden Elementen verwenden, da durch die Beaufschlagung des Zwischengußbereiches mit Kühlmittel und dessen dadurch bewirkte schnelle Kühlung eine Aufhärtung erfolgt. Im Zwischengußbereich des Schienensteges und des Schienenfußes liegt dann in erwünschter Weise ein weicherer, duktilerer Stahl vor, da an diesen Stellen nicht gekühlt wurde. Dies ist ein durchaus erwünschtes und besonders vorteilhaftes Ergebnis, da der durch die Radlast auf Biegespannung beanspruchte Schienenfuß und auch der Schienensteg der dynamischen Beanspruchung im Gleis besser widerstehen können.

## Patentansprüche

1. Verfahren zur Zwischengußschweißung feinperlitisierter Schienen durch Eingießen aluminothermisch erzeugten Stahles in eine die beiden Schienenenden umgebende Gießform und Abkühlen der beiden an die Gießform angrenzenden Schienenenden mit einem Kühlmittel, dadurch gekennzeichnet, daß man nach dem Erstarren des aluminothermisch erzeugten Stahles und dem Abscheren des überstehenden Scweißgutes und der Gießformhälften die Kühlung an der Oberfläche des Schienenkopfes unter Einbeziehung des Zwischengußbereiches fortsetzt, während der Schienensteg und der Schienenfuß im Zwischengußbereich nicht gekühlt werden.

2. Verfahren nach Anspruch 1, dadurch gekennzeichnet, daß man als Kühlmittel Preßluft verwendet.

## Claims

1. Method for the butt casting welding of finely pearlitic rails by pouring aluminothermically produced steel into a casting mould surrounding the two rail ends and cooling the two rail ends adjacent to the casting mould with a coolant, characterised in that, after the solidification of the aluminothermically produced steel and the shearing-off of the projecting weld metal and of the casting mould halves, the cooling is continued at the surface of the rail head, including the butt casting region, whereas the rail stem and the rail foot are not cooled in the butt casting region.

2. Method according to Claim 1, characterised in that compressed air is used as the coolant.

## Revendications

1. Procédé pour le soudage par coulée intermédiaire de rails traités par recuit de microperlitisation, par versement d'acier obtenu par aluminothermie dans un moule entourant les deux extrémités des rails et refroidissement des deux extrémités des rails contiguës au moule par un agent réfrigérant, caractérisé en ce qu'après la solidification de l'acier obtenu par aluminothermie et le cisaillement du métal de soudage qui dépasse et des moitiés du moule, le refroidissement se poursuit à la surface du champignon de rail avec intégration de la zone de la coulée intermédiaire, tandis que l'âme et le patin du rail ne sont, dans la zone de coulée intermédiaire, pas refroidis.

2. Procédé selon la revendication 1, caractérisé en ce que l'agent réfrigérant est de l'air comprimé.
